# FASCICULE DE BREVET EUROPEEN

(11) **EP 3 409 349 B1**
(45) Date de publication et mention de la délivrance du brevet: **13.04.2022**
(21) Numéro de dépôt: 18174486.3
(22) Date de dépôt: 28.05.2018
(51) Int. Cl.: B01J 13/02, B01J 13/04, B01J 13/22, B32B 15/02

(54) **PARTICULE POUR LA RÉALISATION DE PIÈCES MÉTALLIQUES PAR IMPRESSION 3D ET PROCÉDÉ DE RÉALISATION DE PIÈCES MÉTALLIQUES**
PARTIKEL FÜR DIE HERSTELLUNG VON METALLTEILEN DURCH 3D-DRUCK, UND HERSTELLUNGSVERFAHREN DIESER METALLTEILE
PARTICLE FOR MANUFACTURING METAL PARTS BY 3D PRINTING AND METHOD FOR MANUFACTURING METAL PARTS

(30) Priorité: 29.05.2017 FR 1754702
(43) Date de publication de la demande: 05.12.2018
(73) Titulaire: Commissariat à l'énergie atomique et aux énergies alternatives, 75015 Paris (FR)
(72) Inventeur: AIXALA, Luc, 38120 Saint-Egreve (FR); DELLEA, Olivier, 42350 La Talaudiere (FR); GAILLARD, Gilles, 38240 Meylan (FR); PONCELET, Olivier, 38000 Grenoble (FR); TISSOT, Nicolas, 38000 Grenoble (FR)
(74) Mandataire: Brevalex

(56) Documents cités:
- WO-A1-2015/032974
- WO-A1-2015/054493
- FR-A1- 2 974 316
- FR-A1- 2 980 380
- FR-A1- 3 041 278

## Description

### DOMAINE TECHNIQUE ET ÉTAT DE LA TECHNIQUE ANTÉRIEURE

Le domaine de la présente invention concerne la réalisation de pièces métalliques par impression 3D, par exemple pour le secteur automobile, le domaine médical ou encore pour l'aéronautique.

Plus particulièrement, la présente invention se rapporte à des particules métalliques utilisées pour l'impression 3D et à un procédé de réalisation de pièces métalliques par impression 3D, mettant en œuvre de telles particules.

L'impression 3D, aussi appelée fabrication additive, consiste à mettre en forme une pièce en réalisant un empilement de plusieurs couches de matériau déposées successivement les unes sur les autres jusqu'à obtenir la forme finale de la pièce. Chaque couche est fondue, puis solidifiée, sur la couche sous-jacente, de manière à assurer la cohésion de l'empilement.

Il est ainsi possible de produire industriellement des pièces, de forme simple ou complexe, ayant des propriétés mécaniques satisfaisantes.

L'élaboration de pièces en aluminium ou en alliages d'aluminium présente un fort intérêt industriel, notamment, dans le domaine aéronautique.

Les alliages d'aluminium couramment utilisés, dans l'impression 3D, sont AlSi10Mg ou AlSi12, car leurs températures de fusion et de solidification sont proches, facilitant ainsi leur élaboration. Il est également possible de former des alliages d'aluminium à résistance mécanique élevées, par exemple de la série 2xxx, en mélangeant, par exemple, une poudre d'aluminium avec une poudre de cuivre, comme décrit dans l'article de Bartkowiak et al. ("New Developments of Laser Processing Aluminium Alloys via Additive Manufacturing Technique", Physics Procedia 12 (2011) 393-401). Le mélange de poudres est déposé sur un substrat et fondu sous irradiation laser pour former après fusion un alliage de type AlCu.

Il y a également un intérêt à réaliser des pièces par impression 3D en cuivre pur, par exemple pour les applications électroniques, où ce procédé permettrait de réaliser des canaux de refroidissement dans les conducteurs de courant des batteries, augmentant leurs performances.

Cependant, l'aluminium, les alliages d'aluminium et le cuivre présentent sous forme massive une forte réflectivité (plus de 60% du faisceau laser est réfléchi, voire plus de 90% du faisceau est réfléchi dans le cas du cuivre pur à température ambiante). De plus, ces matériaux conduisent très bien la chaleur, ce qui pose également un problème pour réaliser leur fusion par laser. Le procédé pour réaliser des pièces à partir de particules en aluminium et/ou en cuivre nécessite donc des lasers à fortes puissances ou des temps d'irradiation relativement longs, voire des plateaux d'impression chauffés, ce qui complique son industrialisation.

WO 2015/054493 A1 décrit des particules, en particulier pour des applications biologiques, ayant un cœur en cuivre ou en aluminium, recouvert par une couche externe en nanoparticules de cuivre, une couche continue métallique pouvant être disposée entre le cœur et la couche externe.

### EXPOSÉ DE L'INVENTION

C'est, par conséquent, un but de la présente invention de proposer des particules métalliques, pouvant être utilisées dans les technologies d'impression 3D par laser, absorbant efficacement le faisceau laser. Les particules de l'invention sont telles que décrites dans les revendications.

C'est un autre but de la présente invention de proposer un procédé d'élaboration de pièces métalliques facile à mettre en œuvre et ne nécessitant pas une puissance laser trop élevée ou des temps d'irradiation trop longs, pour pouvoir être industrialisé. Le procédé de l'invention est tel que décrit dans les revendications.

Ces buts sont atteints par une particule comprenant un coeur en aluminium, recouvert par une couche externe, la couche externe étant formée de nanoparticules métalliques ou de nanotubes de carbone.

Par nanoparticules, on entend des éléments ou objets de forme allongée, arrondie, sphérique ou polyédrique (cube par exemple), et dont la dimension la plus longue est inférieure à 500nm, et de préférence inférieure à 100nm. Par exemple, la dimension la plus longue va de 1 à 500nm et de préférence de 2 à 100nm, et encore plus préférentiellement de 10 à 100nm. Les nanoparticules sont, par exemple, des nanofils, des nanotubes, des nanosphères ou des nanocubes.

Avantageusement, les nanoparticules sont en cuivre. Ce matériau est bon marché et facile à déposer.

Selon une variante, la couche externe peut être en silicium (divulgué mais pas selon l'invention).

Les particules, selon l'invention, permettent d'améliorer les interactions laser/particule, grâce à la couche externe de la particule qui est nanostructurée, et qui favorise l'absorption du faisceau laser au détriment de la réflexion. La structuration confère un relief (bosses, creux, forte rugosité) à la surface de la particule et permet une meilleure absorption du faisceau laser (au moins 10% d'amélioration) par rapport à une particule dont la surface est lisse. La structuration peut former une organisation surfacique régulière ou irrégulière. Dans le cas d'une couche externe de nanoparticules, il s'agit d'une couche monoparticulaire (une seule épaisseur de nanoparticules) ou d'une couche formée de plusieurs épaisseurs de nanoparticules, continues ou discontinues.

Lors du procédé d'élaboration de la pièce métallique par impression 3D, la particule est utilisée, sous forme d'une poudre. La poudre va fondre sous irradiation 3D et former soit un alliage d'aluminium par exemple de type Al-Cu (série Al 2xxx), soit du cuivre pur (cas d'un cœur de particule en cuivre).

Par cuivre pur, on entend qu'il y a au moins 95% massique de cuivre, de préférence au moins 98% et encore plus préférentiellement au moins 99%.

En fonction de la puissance laser, les nanotubes de carbone vont être soit sublimés soit intégrés dans la composition de l'alliage ou dans le cuivre, par exemple en tant qu'impuretés.

La qualité des matériaux obtenus est améliorée par rapport à l'art antérieur puisque toutes les particules ont la même composition, la même texturation de surface, et de préférence la même granulométrie. Elles vont donc fondre de manière beaucoup plus homogène que les particules de l'art antérieur qui n'ont pas la même composition et/ou la même granulométrie. En effet, par exemple, dans le cas de l'utilisation d'un mélange de poudres, les particules les plus petites peuvent être sublimées sous faisceau laser, si la puissance du laser est élevée. Si la puissance du laser n'est pas très élevée, seules les petites particules peuvent fondre. Dans les deux cas, l'alliage obtenu n'est pas celui désiré. Les particules de l'invention évitent ces désavantages.

Les éléments constitutifs de l'alliage sont au sein de la même particule, et non pas dans plusieurs particules. Avec les particules de l'invention, il n'y a pas besoin de mélanger différentes poudres, ce qui limite les risques liés à la manipulation des poudres et les problèmes de stratification liés aux mélanges de poudres.

Avantageusement, les nanoparticules ont un diamètre allant de 1nm à 500nm, et de préférence de 100nm à 300nm.

Avantageusement, le cœur de la particule a un diamètre allant de 1µm à 150µlm.

Un empilement d'une ou plusieurs couches métalliques est disposé entre la couche externe et le cœur de la particule.

Par métallique, on entend un métal, un métalloïde tel que le silicium ou un alliage de métal. De préférence, il s'agit d'un métal ou du silicium.

La ou les couches métalliques peuvent être continues ou discontinues.

La couche externe seule ou en combinaison avec l'empilement, lorsqu'il y en a un, forme la coquille de la particule.

La composition de l'alliage final, qui constitue la particule fondue, correspond au mélange des matériaux du cœur et de la coquille. Avec de telles particules, il est possible d'obtenir, après fusion, de nombreuses nuances d'alliages « sur mesure ».

Avantageusement, la ou les couches métalliques ont chacune une épaisseur allant de 1nm à 500nm, de préférence de 5nm à 300nm, et encore plus préférentiellement de 10nm à 100nm. L'homme du métier choisira l'épaisseur de chaque couche en fonction de la composition de l'alliage final. De telles épaisseurs peuvent être obtenues à partir de techniques classiques de dépôt, comme le dépôt physique en phase vapeur.

Avantageusement, la ou les couches métalliques sont chacune en un métal choisi, indépendamment, parmi l'or, le platine, l'argent, le manganèse, le magnésium, le zirconium, le zinc, le silicium, le nickel ou le cuivre. L'homme du métier choisira les métaux en fonction de la composition de l'alliage final. De manière générale, deux couches successives de l'empilement n'auront pas la même composition. De préférence, chaque couche de l'empilement aura une composition différente des autres couches de l'empilement.

L'empilement comprend au moins une couche continue recouvrant complètement le cœur de la particule, la couche continue étant, de préférence, celle en contact avec la couche externe. Le cœur en aluminium est protégé de l'oxydation. De préférence, il n'y a pas de couche d'oxyde en surface de l'aluminium, ce qui améliore la qualité de l'alliage final. Selon une variante, une fine couche d'oxyde natif peut être présente en surface de l'aluminium. Une telle couche d'oxyde étant relativement fine, elle n'empêche pas la fusion du cœur de la particule.

Avantageusement, la couche continue est en un matériau moins réducteur que le matériau du cœur de la particule (divulgué mais pas selon l'invention).

Par moins réducteur, on entend que le matériau est moins sensible à l'air (vapeur d'eau et dioxygène), que le matériau du cœur de la particule, pour le protéger des phénomènes d'oxydation. Autrement dit, le matériau s'oxyde moins facilement que le matériau formant le cœur de la particule. Peu ou pas d'oxyde sont formés en surface de la particule. La présence d'oxyde, en surface de la particule, peut perturber, lors de la fusion laser, la propagation du flux thermique et entrainer une porosité résiduelle et/ou la présence d'inclusions dans le matériau final, si toutes les particules ne sont pas fondues par exemple. Eventuellement, les particules peuvent être réactives avec l'air ou l'eau, ce qui peut conduire à un phénomène d'auto-échauffement pouvant mener à leur inflammation. Ces inconvénients sont évités ou limités avec la particule de l'invention.

Par exemple, pour un cœur en aluminium, on choisira pour former la couche continue moins réductrice du cuivre, de l'étain, du nickel, du chrome , ou du manganèse (divulgué mais pas selon l'invention).

On choisira de préférence du cuivre. Ce métal est moins réducteur que l'aluminium, et les techniques de dépôt du cuivre sont bien maitrisées, bon marché et industrialisables. Une couche en cuivre permet une meilleure adsorption des nanoparticules de cuivre à sa surface, par rapport à une couche en un autre métal (divulgué mais pas selon l'invention).

L'empilement comprend au moins une couche continue en un matériau ayant une réflectivité inférieure à celle du matériau du cœur de la particule. Pour un cœur en aluminium, le matériau est du zirconium, du zinc, du silicium, ou du nickel. Un de ces matériaux, positionné à l'extérieur de la particule, en plus d'entrer dans la composition de l'alliage final et éventuellement d'être moins réducteur que l'aluminium, permet de diminuer encore plus la réflectivité des particules et d'améliorer encore plus l'absorption du faisceau laser par exemple. L'apport d'énergie nécessaire à la fusion de la particule est diminué, il y a moins de perte d'énergie.

Une couche en cuivre (divulguée mais pas selon l'invention) ou en nickel permet, également, de diminuer le caractère pyrophorique du cœur de la particule en aluminium.

Dans les procédés de l'art antérieur, qui utilisent des poudres de différentes compositions pour réaliser un alliage, il est difficile de former des particules, par exemple de manganèse ou de magnésium, qui sont des éléments qui s'oxydent facilement. Le choix des alliages d'aluminium est donc limité. Avec le procédé de l'invention, il est possible de réaliser un empilement comprenant une couche en manganèse et/ou en magnésium, disposée sous la couche continue de l'empilement de manière à être protégée de l'oxydation.

Avantageusement, la particule est sphérique et elle a un diamètre allant de 1µm à 150µlm. Par exemple, des diamètres de 1µm à 50µlm peuvent être choisis pour les dépôts par fusion par laser (SLM). Par exemple, des diamètres de 50µlm à 150µm peuvent être choisis pour les dépôts par pulvérisation de matière (FDM), par fusion par faisceau d'électrons (EBM), et par dépôt de métal par laser (LMD).

Une particule sphérique est privilégiée, pour favoriser un bon étalement des particules lors de la formation de la couche de particules (aussi appelé lit ou couche de poudre), notamment dans les procédé de fabrication par SLM et EBM. En effet, des poudres peu sphériques et trop petites (mauvaise coulabilité) ne permettent pas de faire un lit homogène, ce qui génère localement des manques de matières, conduisant à la formation de porosités dans la pièce finale, très préjudiciable à leur qualité (propriétés mécaniques notamment).

Ce but est également atteint par un procédé de fabrication d'une pièce métallique par impression 3D qui comprend, selon un premier mode de réalisation du procédé de l'invention, au moins les étapes successives suivantes :
a1) Fourniture d'une poudre comprenant des particules telles que définies précédemment,
b1) Formation d'un lit de poudre sur un substrat,
c1) Fusion localisée du lit de poudre de manière à former une première zone fondue, et solidification de la première zone fondue de particules de manière à former une première zone solidifiée.

Avantageusement, les étapes b1) et c1) sont répétées au moins une fois de manière à former au moins une autre zone solidifiée sur la première zone solidifiée. La répétition de ces étapes conduit à la formation d'un objet en trois dimensions strate par strate.

Avantageusement, la fusion de la couche de particules est réalisée par fusion laser sélective.

Ce but est également atteint par un procédé de fabrication d'une pièce métallique par impression 3D qui comprend, selon un second mode de réalisation du procédé de l'invention, au moins les étapes successives suivantes :
a2) Fourniture d'une poudre comprenant des particules telles que définies précédemment,
b2) Projection de la poudre sur un substrat, la poudre passant à travers un faisceau laser avant d'atteindre le substrat, de manière à la faire fondre,
c2) Solidification de la poudre fondue sur le substrat de manière à créer une première zone solidifiée.

Avantageusement, les étapes b2) et c2) sont répétées au moins une fois de manière à former au moins une autre zone solidifiée sur la première zone solidifiée.

Selon un exemple non revendiqué, dans ces deux modes de réalisation du procédé de l'invention, le cœur des particules est en aluminium, le cœur étant recouvert par un empilement comprenant une couche en manganèse, une couche en magnésium et une couche en cuivre et par une couche externe de nanoparticules de cuivre, et la couche solidifiée est un alliage d'aluminium 2024.

Selon un exemple non revendiqué, dans ces deux modes de réalisation du procédé de l'invention, le cœur des particules est en aluminium 6060, le cœur étant recouvert par un empilement comprenant une couche en magnésium et une couche en cuivre et par une couche externe de nanoparticules de cuivre, et la couche solidifiée est un alliage d'aluminium 6061.

Selon un exemple non revendiqué, deux modes de réalisation du procédé de l'invention, le cœur des particules est en aluminium 2117, le cœur étant recouvert par un empilement comprenant une couche en manganèse, une couche en magnésium et une couche en cuivre et par une couche externe de nanoparticules de cuivre, et la couche solidifiée est un alliage d'aluminium 2024.

### BRÈVE DESCRIPTION DES DESSINS

La présente invention sera mieux comprise sur la base de la description qui va suivre et des dessins en annexe sur lesquels :
- la figure 1 est une représentation schématique d'une particule, vue en coupe, selon un premier mode de réalisation de l'invention,
- la figure 2 est une représentation schématique d'une particule, vue en coupe, selon un deuxième mode de réalisation de l'invention,
- la figure 3 est une représentation schématique d'une particule, vue en coupe, selon un troisième mode de réalisation de l'invention,
- la figure 4 est une représentation schématique d'une particule, vue en coupe, selon un quatrième mode de réalisation de l'invention,
- la figure 5 représente un cliché obtenu par microscopie électronique à balayage de particules dont la couche externe est formée de nanoparticules de cuivre,
- la figure 6 représente la variation du pourcentage massique de cuivre sur une poudre d'aluminium en fonction du taux de charge et de l'épaisseur du dépôt,
- la figure 7 représente le pourcentage massique des différents éléments constituant les alliages Al 6060 et Al 6061,
- la figure 8 représente le pourcentage massique des différents éléments constituant les alliages Al 2117 et Al 2024.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et pouvant se combiner entre elles.

### EXPOSÉ DÉTAILLÉ DE MODES DE RÉALISATION PARTICULIERS

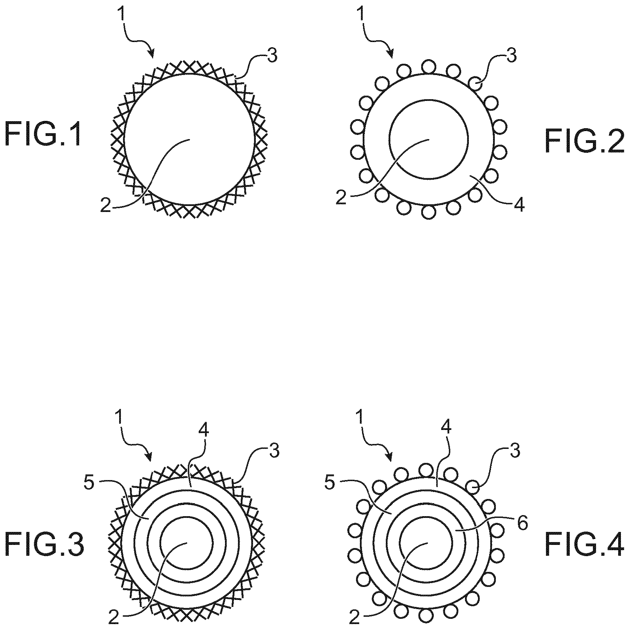

On se réfère tout d'abord aux figures 1 à 4 qui représentent une particule métallique 1 selon différents modes particuliers de réalisation.

La particule 1 a une structure coeur/coquille. Le cœur 2 de la particule 1 est métallique. Il est aluminium De manière générale, le cœur 2 de la particule 1 présente une taille micrométrique (inférieure à 500µm).

Le cœur 2 a, par exemple, un diamètre allant de 1µm à 150µlm. On choisira, par exemple, un cœur ayant un diamètre de 1µm à 10µlm, de 20µlm à 40µlm ou encore de 40µm à 120µlm, en fonction des objectifs et des procédés de fabrication des pièces métalliques.

Comme représenté sur les figures 1 à 4, la particule comprend au moins une couche externe 3, structurée, recouvrant le cœur de la particule. La couche externe 3 peut être en métal. La couche externe 3 est, par exemple, en cuivre . Elle peut également être formée de nanotubes de carbone.

La structuration permet d'augmenter l'absorption optique en créant un relief à la surface de la particule. Par exemple, il peut s'agir d'une couche ayant des bosses et des creux, des filaments, des trous, etc. La structuration peut être choisie en fonction de la longueur d'onde du laser afin de maximiser l'absorption optique. La couche externe 3 est formée d'éléments de tailles nanométriques. Par exemple, la couche externe 3 peut être formée de nanotubes (figure 1), de nanosphères (figure 2 et 3), de nanofils (figure 4) ou encore de nanocubes (non représentés).

Les nanoparticules ont un diamètre allant de nm à 500nm, par exemple de 1nm à 60nm. De préférence, elles ont un diamètre allant de 100nm à 300nm.

De préférence, la couche externe est formée de nanoparticules de cuivre.

Les nanoparticules sont, avantageusement, monodisperses. Elles ont, avantageusement, une taille homogène. Les nanoparticules forment, par exemple, une couche monoparticulaire, c'est-à-dire une couche ayant une seule épaisseur de nanoparticules. Elles peuvent également former une couche ayant plusieurs épaisseurs de nanoparticules. D'une manière générale, la couche de nanoparticules a une épaisseur allant de quelques nanomètres (par exemple 2nm) à plusieurs micromètres (par exemple 5µlm). Par exemple, l'épaisseur de la couche va de 100nm à 5µlm, et de préférence de 100nm à 500nm.

Comme représenté sur les figures 2 à 4, la particule 1 comprendun empilement d'une ou plusieurs (deux, trois...) couches métalliques 4, 5, 6 disposé entre la couche externe 3 et le cœur 2.

L'incorporation de cet empilement permet d'ajouter sur mesure des éléments chimiques dans la particule qui vont, lorsque la particule sera fondue, constituer l'alliage final.

La ou les couches métalliques 4, 5, 6 de l'empilement ont chacune une épaisseur allant de 5nm à 250nm, et de préférence de 10nm à 100nm. L'épaisseur de chaque couche peut être choisie indépendamment les unes des autres. Chaque couche présente, avantageusement, une épaisseur uniforme, c'est-à-dire que l'épaisseur de chaque couche est sensiblement identique en tout point de la particule.

La ou les couches métalliques 4, 5, 6 sont chacune en un métal, de préférence différent des autres couches de l'empilement. Le métal est, par exemple, choisi parmi l'or, le platine, l'argent, le manganèse, le magnésium, le zirconium, le zinc, le silicium, le nickel ou le cuivre.

Les différents éléments constitutifs de la particule, c'est-à-dire les matériaux du cœur et de la coquille (couche externe 3 + couche(s) 4, 5, 6 de l'empilement) ont, avantageusement, des points de fusion proches pour favoriser une fusion homogène de la particule. Les différents éléments ont par exemple des points de fusion ne variant pas de plus de 1000°C, et de préférence pas de plus de 500°C.

Lorsque les particules sont chauffées, lors du balayage laser par exemple, elles chauffent en surface et la chaleur est transmise par conduction à l'intérieur de la particule. La présence de phases eutectiques permet de former le bain de fusion à des températures inférieures.

De préférence, l'empilement comprend au moins une couche continue recouvrant complètement le cœur 2 de la particule 1, la couche continue étant, de préférence, celle en contact avec la couche externe 3 (couche 4 sur les figures 1 à 4). Encore plus préférentiellement, toutes les couches de l'empilement sont continues de manière à recouvrir complètement le cœur 2 de la particule 1 ou la couche sous-jacente.

Selon un premier mode de réalisation (divulgué mais pas selon l'invention), la couche continue est en un matériau moins réducteur que le matériau formant le cœur 2 de la particule 1. De préférence, le matériau est choisi parmi le cuivre, le plomb, l'étain, le nickel, le cadmium, le zirconium, le chrome et le zinc. De préférence, il s'agit du cuivre qui présente un faible pouvoir réducteur tout en étant bon marché.

L'empilement comprend au moins une couche 4, 5, 6 continue en un matériau ayant une réflectivité inférieure à celle du matériau du cœur 2 de la particule 1. Il s'agit par exemple de nickel.

Selon un mode de réalisation, la couche externe 3 et la couche 4 de l'empilement qui est en contact avec la couche externe 3 peuvent être en cuivre. La couche 4 est de préférence continue. L'empilement peut comprendre uniquement la couche 4, comme représenté sur la figure 2.

Selon une variante, représentée sur la figure 3, l'empilement peut comprendre d'autres couches 5, 6, de préférence continue, en plus de la couche 4. A titre illustratif, l'empilement peut comprendre depuis le cœur 2 vers la couche externe 3 : une couche 6 en manganèse et une couche 5 en magnésium. L'empilement peut comprendre, en plus de la couche 4, une seule autre couche 5, par exemple en magnésium.

L'empilement de couches a, de préférence, une épaisseur inférieure à 5µm et de préférence inférieure à 1µm. L'empilement de couches et la couche externe 3 ont de préférence une épaisseur totale inférieure à 1µm.

Dans le cas d'un cœur en aluminium, la particule 1 (cœur + empilement + couche externe) comprend au moins 50% massique d'aluminium.

De préférence, la particule 1 (cœur + couche externe + éventuellement empilement) est sphérique. Elle présente un diamètre allant de 1µm à 150µm.

De telles particules 1 peuvent être élaborées par toute technique adaptée et choisie par l'homme du métier. Par exemple, le cœur 2 de la particule peut être réalisé par atomisation.

Dans le domaine des revêtements de poudre, il existe de nombreuses techniques permettant de déposer une ou plusieurs couches de matériaux à la surface de particules, par exemple, par voie sèche, par voie humide, ou encore par action mécanique.

Les techniques par voie sèche et par voie humide consistent à mettre les particules en suspension, de manière à ce que leur surface soit accessible aux traitements. Cette mise en suspension est réalisée, soit par la dispersion des particules dans un liquide pour les méthodes par voie humide, soit par l'utilisation d'un flux gazeux comme agent fluidisant pour les méthodes par voie sèche.

A titre d'exemple d'un dépôt en voie sèche, il est possible de déposer du silicium sur les particules par dépôt CVD en lit fluidisé (ou FB-CVD pour « Fluidized Bed Chemical Vapor Deposition ») à partir de silane qui sera décomposé en dihydrogène et en silicium.

Les particules peuvent également être fonctionnalisées par une couche d'intérêt par dépôt physique en phase vapeur (ou PVD pour « Physical Vapor Déposition »).

Les dépôts par voie humides englobent les techniques chimiques ou électrochimiques. Les méthodes les plus courantes sont les électrolyses, les bains chimiques (déplacement, réduction) et les conversions.

Il est également possible de réaliser le dépôt par précipitation en phase hétérogène, ou encore l'imprégnation et la décomposition d'organométalliques en phase solvatée.

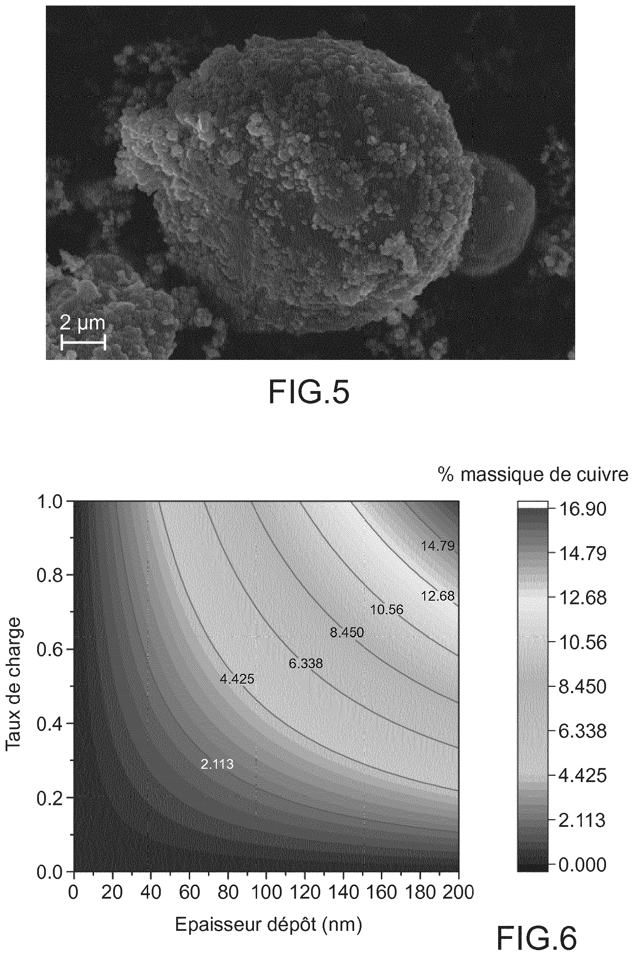

La figure 5 représente une particule ainsi élaborée (divulguée mais pas selon l'invention). Le cœur est en alliage d'aluminium AlSi12 et la couche externe, non continue, est formée de nanoparticules de cuivre. Le diamètre des particules est d'environ 30µm. Le diamètre des nanoparticules à la surface des particules est d'environ 200nm à 300nm. Les nanoparticules ont été réalisées par dépôt chimique (réduction, oxydo-réduction).

Le procédé de fabrication de pièces métalliques, par impression 3D, à partir d'une poudre de particules, telles que précédemment définies, va maintenant être décrit. Le procédé met au moins en jeu une étape dans laquelle les particules sont fondues. Concrètement, un substrat est recouvert, successivement, par plusieurs couches localement fondues puis solidifiées jusqu'à obtenir la forme finale de la pièce désirée.

Selon un premier mode de réalisation, le procédé comprend les étapes successives suivantes :
a1) Fourniture d'une poudre comprenant des particules 1 telles que définies précédemment,
b1) Formation d'une couche de particules 1 (aussi appelée lit de poudre) sur un substrat,
c1) Fusion localisée du lit de poudre de manière à former une première zone fondue, et solidification de la première zone fondue de particules 1 de manière à former une première zone solidifiée.

L'étape de fusion permet de faire fondre localement les particules 1 et de créer des motifs fondus dans le lit de poudre. Une ou plusieurs zones de particules fondues peuvent être réalisées pour former le motif désiré. Avantageusement, les particules formant le motif fondent complètement de manière à conduire, lors de la solidification, à une ou plusieurs zones solidifiées soit en cuivre soit en un alliage dont tous les éléments sont répartis de manière homogène.

Les étapes b1) et c1) peuvent être répétées au moins une fois de manière à former au moins une autre zone solidifiée sur la première zone solidifiée.

Le substrat (aussi appelé plateau) peut descendre verticalement (selon un axe Z perpendiculaire au lit de poudre). Au début du procédé, la poudre est étalée sur le plateau et une première zone solidifiée est réalisée. Pour la formation du motif en 3D, on étale ensuite la poudre, à chaque fois, sur la zone solidifiée précédente.

Avantageusement, la fusion des particules 1 est réalisée par un faisceau laser ou un faisceau d'électrons qui balaie localement la surface de chaque couche de poudre pour la faire fondre, selon un motif particulier. Après le passage du faisceau, la couche se solidifie. Une nouvelle couche de particules est, de nouveau, déposée sur la couche précédemment solidifiée, elle est ensuite, de manière identique, fondue puis solidifiée. Le procédé se répète jusqu'à obtenir la forme finale de la pièce. Les poudres non solidifiées sont ensuite évacuées et la pièce finale est détachée du substrat.

Les techniques utilisées peuvent être la fusion par faisceau d'électrons (EBM), ou par fusion par laser (SLM).

De préférence la fusion par laser est utilisée. Le diamètre des particules 1 de la poudre va de 1µm à 50µlm. De préférence, la poudre est monodisperse. Les caractéristiques d'une poudre, dont le diamètre moyen des particules est de 30µlm, sont par exemple, d₅₀=30µm, d₁₀=10µm et d₉₀=50µm. Le diamètre des particules peut être mesuré avec un granulomètre laser.

Les machines liées au procédé SLM comprennent généralement un système d'alimentation en poudre (« powder delivery system »), un dispositif d'étalement et d'homogénéisation de la surface de la poudre (« Roller » ou « Blade »), une source laser infrarouge (par exemple à une longueur d'onde de 1060nm environ), un scanner pour diriger le faisceau, une zone de fabrication. L'ensemble est confiné dans une enceinte thermiquement isolante, pour contrôler l'atmosphère, mais aussi pour éviter la dissémination des poudres.

Selon un autre mode de réalisation, le procédé comprend les étapes successives suivantes :
a2) Fourniture d'une poudre comprenant des particules 1 telles que définies précédemment,
b2) Projection de la poudre sur un substrat, la poudre passant à travers un faisceau laser avant d'atteindre le substrat, de manière à la faire fondre,
c2) Solidification de la poudre fondue sur le substrat de manière à créer une première zone solidifiée.

De préférence, les étapes b2) et c2) sont répétées au moins une fois de manière à former au moins une autre zone solidifiée sur la première zone solidifiée.

Lorsque la poudre est projetée, par exemple via une buse, en direction du substrat, elle passe à travers un faisceau laser qui la fait fondre. Elle continue ensuite son chemin sous forme fondue jusqu'à atteindre le substrat. La poudre est projetée localement sur le substrat de manière à former le motif désiré.

Cette technique est une technique d'impression 3D par pulvérisation de matière (ou FDM pour « Fused Deposition Modeling »). De préférence, le diamètre des particules de la poudre va de 50µm à 150µlm. De préférence, la poudre est monodisperse.

La pièce obtenue, selon l'un des procédés, peut être soumise à une étape de recuit (traitement thermique) pour réduire les contraintes internes et uniformiser les propriétés du matériau.

Avec les modes de réalisation du procédé de l'invention, le rendement thermique de conversion est amélioré. Il n'est pas nécessaire d'avoir une forte puissance de laser et/ou de nombreux faisceaux pour pouvoir générer un bain de fusion. Les coûts d'élaboration sont réduits et le rendement du procédé est amélioré. On observe également une baisse des défauts matière (notamment le phénomène de sphéroïdisation et de projection d'une partie de la poudre fondue sous l'effet des tensions superficielles observées quand la puissance laser est trop importante, ce phénomène est aussi appelé « balling »).

Le procédé peut être utilisé pour former du cuivre pur ou des alliages du type Al 2xxx, Al 6xxx ou Al 7xxx, qui sont intéressants dans le domaine de l'aéronautique.

Le procédé pourrait également être utilisé pour réaliser des matériaux composites à matrice métallique (par exemple à matrice de titane) ou encore pour réaliser des pièces en alliages ferreux, en alliages à base de titane, de cobalt-chrome, de nickel...

Un tel procédé répond aux besoins industriels en augmentant les rendements, la qualité des pièces et le nombre d'alliages disponibles.

### EXEMPLES NON REVENDIQUES

Dans les différents exemples, les pièces ont été mises en forme par SLM. L'épaisseur des lits de poudre déposés va de quelques micromètres à quelques centaines de micromètres, par exemple de 10µm à 100µm. Le lit de poudre est balayé localement par un faisceau laser se déplaçant à une vitesse de 100 à 1000cm/s. Le diamètre du spot du laser est de 70µm. La puissance du laser va de 300W à 400W.

### Formation d'un alliage AlSi10Mg0.2 à partir d'un cœur de particule en AlSi7Mg0.2 :

Dans ce premier exemple, un alliage de AlSi10Mg0.2 est élaboré. Pour cela des particules de 50µlm de diamètre sont recouvertes par une couche continue de silicium et par une couche externe nanostructurée de nanotubes de carbone. La couche continue et la couche externe nanostructurée ont une épaisseur globale de 500nm. Le revêtement de silicium représente 3% massique de la masse de la particule finale. Une pièce est réalisée par SLM à partir de ces particules. L'alliage de la pièce finale est AlSi10Mg0.2.

### Formation d'un alliage d'aluminium 2024 à partir d'un cœur de particule en aluminium :

Dans cet exemple, on décide de former un alliage d'aluminium 2024. Les particules de l'invention sont élaborées à partir de particules d'aluminium pur. Les particules d'aluminium ont un diamètre de 20µm. Elles ont une réflectivité à 1064nm de 35%. Le cœur en aluminium est recouvert successivement par :
- une couche continue de manganèse d'une épaisseur de 12nm, le pourcentage massique de manganèse allant de 0,3% à 0,9% par rapport à la masse finale d'aluminium 2024 initial,
- une couche continue de magnésium d'une épaisseur de 97nm, le pourcentage massique de magnésium allant de 1% à 1,8% par rapport à la masse du cœur en aluminium 2024,
- une couche continue de cuivre d'une épaisseur de 25nm,
- une couche de nanoparticules de cuivre d'une épaisseur de 25nm.

La figure 6 représente la variation du pourcentage massique de cuivre en fonction du taux de charge et de l'épaisseur du dépôt. Le taux de charge est la proportion de matériau par rapport à l'air (i.e. ça représente l'inverse de la « porosité » du dépôt). Par exemple, un taux de charge de 1 correspond à une couche dense de cuivre.

Les particules finales obtenues ont un gain d'absorption de 10% à 20% par rapport au cœur d'aluminium. Une fois fondues, les particules forment un alliage Al2024.

### Formation d'un alliage d'aluminium 6061 à partir d'un cœur de particule en aluminium 6060 :

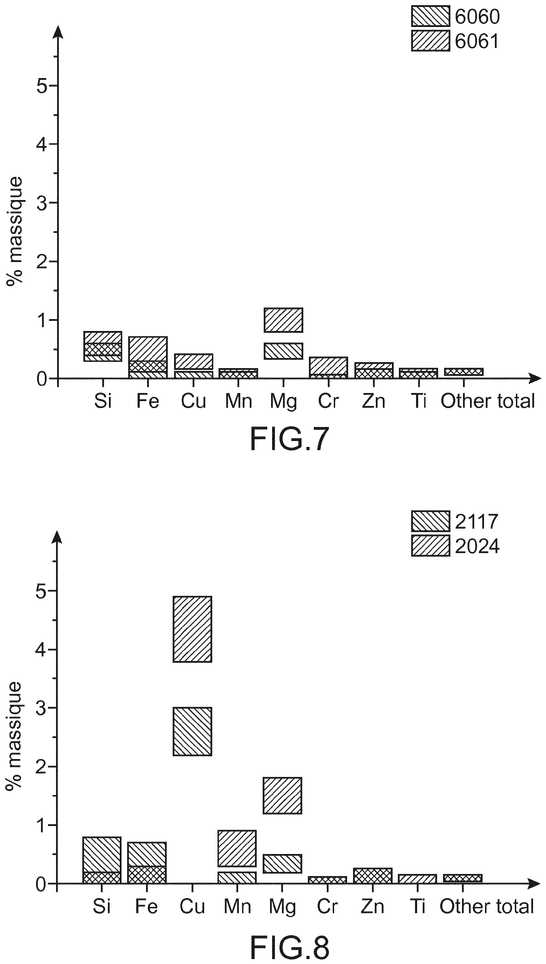

Dans cet exemple, on souhaite former un alliage d'aluminium 6061 à partir d'un cœur de particules en aluminium 6060. La figure 7 met en évidence les écarts de composition entre les alliages Al6061 et Al6060. Ceci met en évidence que si l'on rajoute du cuivre et du magnésium à l'alliage Al6060, on peut obtenir l'alliage Al6061. Le cœur de particules en Al6060 est donc successivement recouvert par une couche continue de magnésium puis par une couche continue de cuivre et finalement par une couche de nanoparticules de cuivre ayant un diamètre allant de 40 à 70nm.

### Formation d'un alliage d'aluminium 2024 à partir d'un cœur de particule en aluminium 2117 :

Pour former un alliage d'aluminium 2024, on part d'un cœur de particules en aluminium 2117. A partir de la composition des différents alliages, on observe qu'en rajoutant du manganèse, du cuivre et du magnésium à l'alliage Al2117, on peut obtenir l'alliage Al2024 (figure 8). On recouvre donc un cœur de particules en Al2117 successivement par :
- une couche continue de manganèse, de 10nm d'épaisseur, ce qui représente un ajout de 0,7% par rapport à la masse de matériau final,
- une couche continue de magnésium, de 74nm d'épaisseur, ce qui représente un ajout de 1,3% par rapport à la masse de matériau final,
- une couche continue de cuivre, de 10nm d'épaisseur,
- une couche de nanoparticules de cuivre ayant un diamètre d'environ 20nm.

Les particules finales obtenues ont un gain d'absorption de 10% à 20% par rapport au cœur d'aluminium 2117.

## Revendications

1. Particule (1) pour l'impression 3D comprenant un cœur (2) en aluminium recouvert successivement par :
- un empilement formé d'une ou plusieurs couches métalliques (4, 5, 6), l'empilement comprenant au moins une couche continue recouvrant complètement le cœur (2) de la particule (1), la couche continue étant en zirconium, en zinc, en silicium ou en nickel,
- une couche externe (3) formée de nanoparticules métalliques ou de nanotubes de carbone.

2. Particule selon la revendication précédente, **caractérisée en ce que** les nanoparticules sont en cuivre.

3. Particule selon l'une des revendications 1 et 2, **caractérisée en ce que** les nanoparticules ont un diamètre allant de 1nm à 500nm, et de préférence de 100nm à 300nm.

4. Particule selon l'une des revendications précédentes, **caractérisée en ce que** le cœur de la particule a un diamètre allant de 1µm à 150µlm.

5. Particule selon l'une des revendications précédentes, **caractérisée en ce que** la ou les couches métalliques (4, 5, 6) ont chacune une épaisseur allant de de 1nm à 500nm, de préférence de 5nm à 300nm, et encore plus préférentiellement de 10nm à 100nm.

6. Particule selon l'une quelconque des revendications précédentes, **caractérisée en ce que** la ou les couches métalliques (4, 5, 6) sont chacune en un métal choisi, indépendamment, parmi l'or, le platine, l'argent, le manganèse, le magnésium, le zirconium, le zinc, le silicium, le nickel ou le cuivre.

7. Particule selon l'une quelconque des revendications précédentes, **caractérisée en ce que** la couche continue est celle en contact avec la couche externe (3).

8. Particule selon l'une quelconque des revendications précédentes, **caractérisée en ce que** la particule (1) est sphérique et **en ce qu'**elle a un diamètre allant de 1µm à 150µlm.

9. Procédé de fabrication d'une pièce métallique par impression 3D comprenant au moins les étapes successives suivantes :
a1) Fourniture d'une poudre comprenant des particules (1) telles que définies dans l'une quelconque des revendications 1 à 8,
b1) Formation d'un lit de particules (1) sur un substrat,
c1) Fusion localisée du lit de poudre de manière à former une première zone fondue, et solidification de la première zone fondue de particules (1) de manière à former une première zone solidifiée,
les étapes b1) et c1) étant de préférence répétées au moins une fois de manière à former au moins une autre zone solidifiée sur la première zone solidifiée.

10. Procédé selon la revendication 9, **caractérisé en ce que** la fusion de la couche de particules (1) est réalisée par fusion laser sélective.

11. Procédé de fabrication d'une pièce métallique par impression 3D comprenant au moins les étapes successives suivantes :
a2) Fourniture d'une poudre comprenant des particules (1) telles que définies dans l'une quelconque des revendications 1 à 8,
b2) Projection de la poudre sur un substrat, la poudre passant à travers un faisceau laser avant d'atteindre le substrat, de manière à la faire fondre,
c2) Solidification de la poudre fondue sur le substrat de manière à créer une première zone solidifiée.

12. Procédé selon la revendication précédente, **caractérisé en ce que** les étapes b2) et c2) sont répétées au moins une fois de manière à former au moins une autre zone solidifiée sur la première zone solidifiée.

13. Procédé selon l'une quelconque des revendications 9 à 12, **caractérisé en ce que** le cœur (2) des particules (1) est en aluminium et **en ce que** l'empilement comprend une couche en manganèse et/ou une couche en magnésium, disposée sous la couche continue de l'empilement.

## Patentansprüche

1. Partikel (1) für den 3D-Druck, umfassend einen Kern (2) aus Aluminium, der sukzessive durch Folgendes bedeckt ist:
- einen Stapel, der aus einer oder mehreren Metallschichten (4, 5, 6) gebildet ist, wobei der Stapel wenigstens eine durchgehende Schicht umfasst, die den Kern (2) des Partikels (1) vollständig bedeckt, wobei die durchgehende Schicht aus Zirkonium, aus Zink, aus Silizium oder aus Nickel ist,
- eine externe Schicht (3), die aus metallischen Nanopartikeln oder aus Kohlenstoffnanoröhrchen gebildet ist.

2. Partikel nach dem vorhergehenden Anspruch, **dadurch gekennzeichnet, dass** die Nanopartikel aus Kupfer sind.

3. Partikel nach einem der Ansprüche 1 und 2, **dadurch gekennzeichnet, dass** die Nanopartikel einen Durchmesser haben, der von 1 nm bis 500 nm geht, und vorzugsweise von 100 nm bis 300 nm.

4. Partikel nach einem der vorhergehenden Ansprüche, **dadurch gekennzeichnet, dass** der Kern des Partikels einen Durchmesser hat, der von 1 µm bis 150 µm geht.

5. Partikel nach einem der vorhergehenden Ansprüche, **dadurch gekennzeichnet, dass** die Metallschicht(en) (4, 5, 6) jeweils eine Dicke hat/haben, die von 1 nm bis 500 nm geht, vorzugsweise von 5 nm bis 300 nm, und noch weiter bevorzugt von 10 nm bis 100 nm.

6. Partikel nach einem der vorhergehenden Ansprüche, **dadurch gekennzeichnet, dass** die Metallschicht(en) (4, 5, 6) jeweils aus einem Metall ist/sind, das unabhängig ausgewählt ist aus Gold, Platin, Silber, Mangan, Magnesium, Zirkonium, Zink, Silizium, Nickel oder Kupfer.

7. Partikel nach einem der vorhergehenden Ansprüche, **dadurch gekennzeichnet, dass** die durchgehende Schicht jene in Kontakt mit der externen Schicht (3) ist.

8. Partikel nach einem der vorhergehenden Ansprüche, **dadurch gekennzeichnet, dass** das Partikel (1) sphärisch ist, und dass es einen Durchmesser hat, der von 1 µm bis 150 µm geht.

9. Verfahren zur Herstellung eines metallischen Werkstücks durch 3D-Druck, umfassend wenigstens die folgenden aufeinanderfolgenden Schritte:
a1) Bereitstellen eines Pulvers, das Partikel (1) wie in einem der Ansprüche 1 bis 8 definiert enthält,
b1) Bilden eines Betts von Partikeln (1) auf einem Substrat,
c1) lokalisiertes Schmelzen des Pulverbetts derart, dass eine erste geschmolzene Zone gebildet wird, und Aushärten der ersten geschmolzenen Zone von Partikeln (1) derart, dass eine erste ausgehärtete Zone gebildet wird,
wobei die Schritte b1) und c1) vorzugsweise wenigstens ein Mal derart wiederholt werden, dass wenigstens eine weitere ausgehärtete Zone auf der ersten ausgehärteten Zone gebildet wird.

10. Verfahren nach Anspruch 9, **dadurch gekennzeichnet, dass** das Schmelzen der Schicht von Partikeln (1) durch selektives Laserschmelzen realisiert wird.

11. Verfahren zur Herstellung eines metallischen Werkstücks durch 3D-Druck, umfassend wenigstens die folgenden aufeinanderfolgenden Schritte:
a2) Bereitstellen eines Pulvers, das Partikel (1) wie in einem der Ansprüche 1 bis 8 definiert enthält,
b2) Spritzen des Pulvers auf ein Substrat, wobei das Pulver durch einen Laserstrahl hindurch passiert, bevor es das Substrat erreicht, derart, dass es schmilzt,
c2) Aushärten des geschmolzenen Pulvers auf dem Substrat derart, dass eine erste ausgehärtete Zone erzeugt wird.

12. Verfahren nach dem vorhergehenden Anspruch, **dadurch gekennzeichnet, dass** die Schritte b2) und c2) wenigstens ein Mal derart wiederholt werden, dass wenigstens eine weitere ausgehärtete Zone auf der ersten ausgehärteten Zone gebildet wird.

13. Verfahren nach einem der Ansprüche 9 bis 12, **dadurch gekennzeichnet, dass** der Kern (2) der Partikel (1) aus Aluminium ist, und dass der Stapel eine Schicht aus Mangan und/oder eine Schicht aus Magnesium umfasst, die unter der durchgehenden Schicht des Stapels angeordnet ist.

## Claims

1. Particle (1) for 3D printing which comprises a core (2) made of aluminium, covered successively with :
- a stack of one of more metallic layers (4, 5, 6), the stack comprises at least one continuous layer completely covering the core (2) of the particle (1), the continuous layer being made of zirconium, zinc, silicon or nickel,
- an external layer (3) formed from metal nanoparticles or carbon nanotubes.

2. Particle according to the preceding claim **characterised in that** the nanoparticles are made of copper.

3. Particle according to any of claims 1 and 2 **characterised in that** the nanoparticles have a diameter which ranges from 1nm to 500nm, and preferably from 100nm to 300nm.

4. Particle according to one of the preceding claims, **characterised in that** the core of the particle has a diameter which ranges from 1µm to 150µm.

5. Particle according to one of the preceding claims, **characterised in that** the metallic layer or layers (4, 5, 6) each have a thickness which ranges from 1nm to 500nm, preferably from 5nm to 300nm and yet more preferably from 10nm to 100nm.

6. Particle according to any one of the preceding claims, **characterised in that** the metallic layer or layers (4, 5, 6) are each made of one metal chosen, independently, from gold, platinum, silver, manganese, magnesium, zirconium, zinc, silicon, nickel or copper.

7. Particle according to any one of the preceding claims, **characterised in** the continuous layer is in contact with the external layer (3).

8. Particle according to any whatsoever of the preceding claims, **characterised in that** the particle (1) is spherical and **in that** it has a diameter of from 1µm to 150µm .

9. Method for manufacturing a metal part by 3D printing comprising at least the following successive steps:
a1) Supply of a powder comprising particles (1) as defined in any whatsoever of claims 1 to 8,
b1) Formation of a bed of particles (1) on a substrate,
c1) Localised melting of the powder bed so as to form a first molten zone, and solidification of the first molten zone of particles (1) so as to form a first solidified zone, steps b1) and c1) being, preferably, repeated at least once so as to form at least one other solidified zone on the first solidified zone.

10. Method according to claim 9, **characterised in that** melting of the layer of particles (1) is achieved by selective laser melting.

11. Method for manufacturing a metal part by 3D printing comprising at least the following successive steps:
a2) Supply of a powder comprising particles (1) as defined in any whatsoever of claims 1 to 8,
b2) Projection of the powder onto a substrate, where the powder passes through a laser beam before reaching the substrate, so that it is melted,
c2) Solidification of the molten powder on the substrate so as to create a first solidified zone.

12. Method according to the preceding claim, **characterised in that** the steps b2) and c2) are repeated at least once so as to form at least one other solidified zone on the first solidified zone.

13. Method according to any whatsoever of claims 9 to 12, **characterised in that** the core (2) of the particles (1) is made of aluminium and **in that** the stack comprises a layer (4) made of manganese and/or a layer made of magnesium, disposed under the continuous layer of the stack.
